# FASCICULE DE BREVET EUROPEEN

(11) **EP 0 768 457 B1**
(45) Date de publication et mention de la délivrance du brevet: **20.09.2000**
(21) Numéro de dépôt: 96402068.9
(22) Date de dépôt: 27.09.1996
(51) Int. Cl.: F02F 1/42, F02B 19/12, F02M 25/07

(54) **Moteur à combustion interne à quatre temps et à allumage commandé et injection directe de carburant**
Fremdgezündete Viertaktbrennkraftmaschine mit direkter Kraftstoffeinspritzung
Spark ignited four-stroke combustion engine with direct fuel injection

(30) Priorité: 13.10.1995 FR 9512263
(43) Date de publication de la demande: 16.04.1997
(73) Titulaire: INSTITUT FRANCAIS DU PETROLE, 92500 Rueil Malmaison (FR)
(72) Inventeur: Monnier, Gaétan, 92500 Rueil-Malmaison (FR)

(56) Documents cités:
- EP-A- 0 412 008
- EP-A- 0 483 109
- EP-A- 0 676 540
- DE-A- 2 039 462
- FR-A- 814 385
- GB-A- 2 233 390
- US-A- 4 216 748
- US-A- 4 679 532
- US-A- 5 042 443

## Description

La présente invention concerne le domaine des moteurs 4 temps à allumage commandé et à injection directe de carburant dans la chambre de combustion.

Plus particulièrement, la présente invention a trait au contrôle de l'aérodynamique interne de la chambre de combustion de moteurs définis ci-dessus.

De façon intéressante les moteurs dits transversaux, avec l'échappement situé vers l'arrière du véhicule et l'admission vers l'avant, sont concernés par la présente invention. Le document DE-A-2 039 462 montre un moteur pareil.

Un problème inhérent à ce type de moteurs réside dans le démontage notamment de la bougie d'allumage, et du ou des injecteurs. Sachant en outre que beaucoup de moteurs transversaux présentent un axe de cylindre incliné vers l'arrière du véhicule par rapport à la verticale, donc du côté de l'échappement, tout élément démontable ne doit pas être placé du côté échappement mais plutôt vers l'avant du capot, afin de rendre possible et aisé son démontage.

La plupart des moteurs transversaux comportent côté admission c'est-à-dire vers l'avant du véhicule au moins un conduit d'admission débouchant dans un même cylindre. Côté échappement (vers l'arrière du véhicule) sont situés au moins un conduit d'échappement et les lumières et soupapes associées. La bougie d'allumage est préférentiellement située autour de l'axe du cylindre, donc dans une position centrale de la chambre de combustion. Cette disposition permet de brûler une charge homogène, sans risque de cliquetis.

Il est par ailleurs intéressant de pouvoir faire fonctionner des moteurs 4 temps à allumage commandé de façon optimale quelles que soient les conditions de charge.

On cherche donc à avoir tantôt une charge dite homogène, tantôt une charge dite stratifiée, et à pouvoir passer rapidement d'un mode de fonctionnement à l'autre. Un moteur présentant ces caractéristiques a par exemple été décrit dans la demande de brevet EN. 95/07384 déposée au nom de la demanderesse.

La présente invention s'applique préférentiellement à ce type de moteurs et permet notamment pour des moteurs transversaux, d'améliorer le montage et le démontage de pièces essentielles comme les bougies et/ou les injecteurs.

Ainsi, l'invention a pour objet un moteur quatre temps à combustion interne et à allumage commandé comprenant une chambre de combustion dans laquelle débouchent via des lumières un premier et un deuxième conduits d'admission et un conduit d'échappement, obturable chacune par un moyen tel qu'une soupape, au moins un moyen d'allumage, un moyen d'injection directe de carburant dans ladite chambre de combustion.

Selon l'invention les lumières d'admission sont disposées de façon diamétralement opposée.

En outre le moteur selon l'invention comprend une préchambre ouverte sur ladite chambre de combustion dans laquelle débouche le moyen d'injection, ladite préchambre étant située dans le demi-cylindre ne contenant pas la lumière d'échappement et contenant l'une des lumières d'admission.

Selon l'un des modes de réalisation de l'invention, un premier moyen d'allumage débouche dans ladite préchambre.

Préférentiellement, l'un au moins des moyens d'allumage présente un axe disposé perpendiculairement à la surface extérieure du jet de carburant généré par le moyen d'injection.

Le moteur selon l'invention étant installé dans un véhicule, le demi-cylindre contenant ladite préchambre est préférentiellement orienté vers l'avant du véhicule.

Conformément à un mode de réalisation de l'invention, il comprend deux moyens d'allumage.

Ainsi, le premier moyen d'allumage est placé à proximité de l'axe longitudinal du cylindre.

De façon particulière, la distance entre le nez du moyen d'injection et l'un au moins des moyens d'allumage est comprise entre 15 et 30 mm.

Avantageusement, le moyen d'injection est disposé de façon diamétralement opposée à la lumière d'échappement.

Selon un mode particulier de réalisation de l'invention, le premier conduit d'admission, débouchant dans le même demi-cylindre que le conduit d'échappement, peut être mis en liaison avec le conduit d'échappement pour certaines conditions de fonctionnement du moteur.

En accord avec un autre mode de réalisation de l'invention, le premier conduit d'admission, présente à proximité de la chambre de combustion, un axe sensiblement parallèle à l'axe du cylindre, afin de créer dans ladite chambre de combustion un mouvement tourbillonnaire autour d'un axe perpendiculaire à l'axe du cylindre.

D'autres caractéristiques, détails et avantages de l'invention apparaîtront mieux à la lecture de la description qui va suivre, faite à titre illustratif et nullement limitatif en référence aux figures annexées sur lesquelles :
- La figure 1 est une coupe longitudinale simplifiée selon A-A d'un premier mode de réalisation de l'invention;
- La figure 2 est une coupe transversale du premier mode de réalisation de l'invention;
- La figure 3 montre en coupe longitudinale simplifiée selon B-B un deuxième mode de réalisation de l'invention; et
- La figure 4 illustre par une coupe transversale le deuxième mode de réalisation de l'invention.

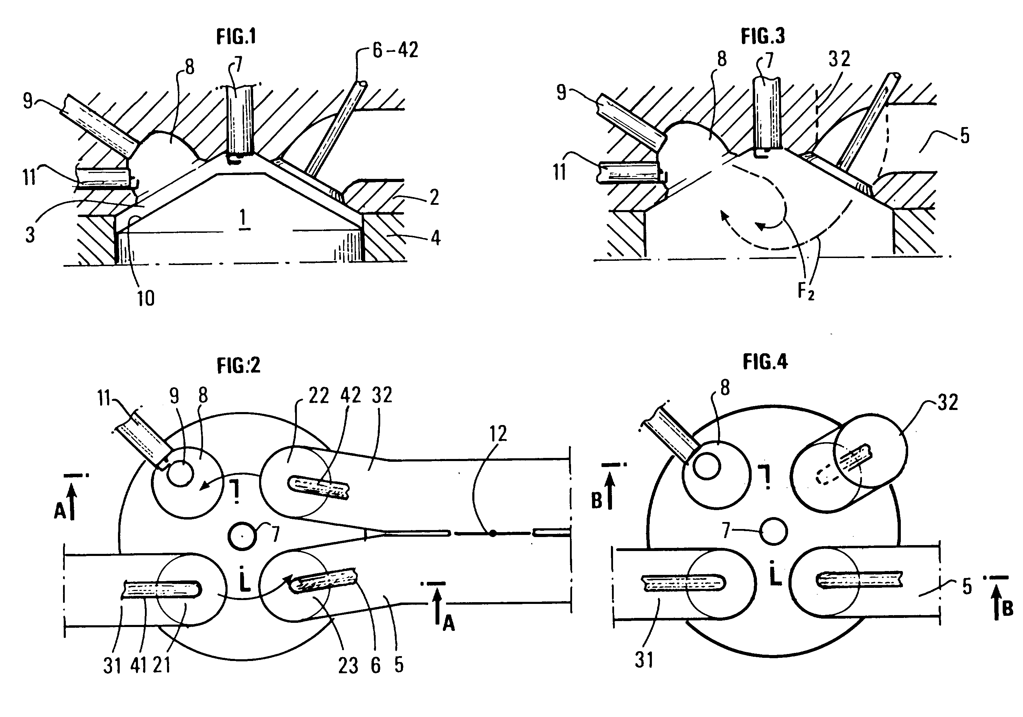

Les figures 1 et 2 permettent de schématiser les éléments constitutifs essentiels d'un moteur selon un mode de réalisation de l'invention.

La figure 1 montre un piston 1 au point mort haut, avec une surface supérieure 10 en forme de toit à double pente. Ce profil est également celui de la culasse 2 à travers laquelle débouchent des conduits d'admission 31, 32 via des lumières 21, 22 chacune obturable par des moyens spécifiques tels que des soupapes 41,42.

La chambre de combustion 3 est définie de façon classique par la surface supérieure 10 du piston 1, la surface inférieure de la culasse 2 et le cylindre 4.

Un conduit d'échappement 5 débouche en outre dans la chambre de combustion 3, par une lumière 23 obturable par un moyen particulier tel qu'une soupape 6.

Au moins un moyen d'allumage, tel qu'une bougie 7 peut être disposée le plus au centre possible de la chambre afin d'éviter le cliquetis. La bougie 7 est préférentiellement placée sur (ou à proximité de) l'axe longitudinal du cylindre, vers le sommet du toit à double pente formé par la culasse 2.

Selon l'invention, chacune des lumières d'admission 21, 22 est disposée de façon diamétralement opposée à l'autre, comme visible sur la figure 2.

En outre, une préchambre 8, ouverte sur ladite chambre de combustion 3 est prévue. La préchambre 8 est disposée de façon diamétralement opposée à la lumière d'échappement 23. Un injecteur de carburant 9 débouche dans la préchambre 8.

Ainsi la préchambre 8 et l'une des admissions 21, 31 appartiennent à un même demi-cylindre tandis que l'autre admission 23, 5 et l'échappement appartiennent à l'autre demi-cylindre. Plus précisément, la préchambre 8 et l'une des admissions 21, 31 appartiennent au demi-cylindre orienté vers l'avant du véhicule, facilement accessible. Corollairement, l'autre admission 22, 32 et l'échappement 23, 5 appartiennent au demi-cylindre situé du côté de l'arrière du véhicule, vers l'échappement final.

Selon un mode de réalisation de l'invention, une deuxième bougie d'allumage Il peut en outre être prévue ; elle est alors préférentiellement disposée dans la préchambre 8, c'est-à-dire du côté de l'admission. Ainsi la bougie 11 est aisément démontable.

Par ailleurs, la bougie d'allumage 11 présente un axe disposé perpendiculairement à la surface extérieure du jet produit par l'injecteur de carburant 9. Cette disposition est intéressante car elle permet d'obtenir une bonne stratification du mélange, avec une zone très riche en carburant à proximité de la bougie 11, dans la préchambre 8.

La bougie 7 disposée centralement est alors dédiée au fonctionnement en charge homogène.

Côté échappement, le conduit d'admission 32 et le conduit d'échappement 5 sont inclinés vis à vis de l'axe longitudinal du cylindre. Ainsi un écoulement autour de l'axe longitudinal du cylindre peut être créé dans la chambre de combustion 3.

En outre, selon ce mode de réalisation de l'invention, une liaison 12 peut être prévue entre le conduit d'admission 32 et le conduit d'échappement 5. On peut alors réaliser un circuit de recirculation des gaz d'échappement, circuit ici très court et donc très intéressant au plan du temps de réponse (en régimes transitoires). La recirculation des gaz d'échappement (EGR) est très facile à obtenir puisque le moteur est agencé de façon à ce que l'un des conduits d'admission 32 et le conduit d'échappement 5 sont disposés côte à côte, à proximité immédiate l'un de l'autre.

L'autre avantage du mode de réalisation qui vient d'être décrit réside dans la disposition de l'injecteur 9 (et éventuellement d'une bougie 11) du côté de l'avant du capot, donc facilement démontable(s).

Les figures 3 et 4 illustrent un mode de réalisation de l'invention qui diffère de celui des figures 1 et 2 par l'orientation du conduit d'admission 32 à proximité de la chambre de combustion 3.

Le conduit d'admission 32 présente ici un axe peu incliné vis-à-vis de l'axe longitudinal du cylindre. Ainsi le fluide issu du conduit d'admission 32 pénètre essentiellement longitudinalement dans le cylindre puis est dévié par la surface supérieure 10 du piston 1 vers la préchambre 8.

De ce fait le mouvement général des gaz dans la chambre de combustion 3 est une rotation autour d'un axe sensiblement perpendiculaire à l'axe longitudinal, comme indiqué par les flèches F2 sur les figures 3 et 4. Ce mouvement est couramment appelé "tumble" par l'Homme de Métier.

Pour les modes de réalisation évoqués ci-avant, on choisira de placer le nez de l'injecteur 9 à une distance comprise entre 15 et 30 mm de l'espace inter-électrode de la bougie d'allumage 11 ou 7. Cette distance permet d'optimiser l'allumage lors d'une combustion en mode stratifié.

Bien entendu, d'autres modifications de forme pourront être apportées par l'Homme de Métier au moteur qui vient d'être décrit sans sortir du cadre de la présente invention.

## Revendications

1. Moteur 4 temps à combustion interne et à allumage commandé comprenant une chambre de combustion (3) dans laquelle débouchent via des lumières (21, 22, 23) un deuxième et un premier conduits d'admission (31, 32) et un conduit d'échappement (5) obturable chacune par un moyen tel qu'une soupape (41, 42, 6), au moins un moyen d'allumage (7 ; 11), un moyen (9) d'injection directe de carburant dans ladite chambre de combustion (3), les lumières d'admission (21, 22) étant disposées de façon diamétralement opposée, le moteur comprenant en outre une préchambre (8) ouverte sur ladite chambre de combustion (3) et dans laquelle débouche le moyen d'injection (9), ladite préchambre (8) étant située dans le demi-cylindre ne contenant pas la lumière d'échappement (23) et contenant l'une des lumières d'admission (21).

2. Moteur selon la revendication 1, caractérisé en ce que l'un au moins des moyens d'allumage (11) présente un axe disposé perpendiculairement à la surface extérieure du jet de carburant généré par le moyen d'injection (9).

3. Moteur selon l'une quelconque des revendications précédentes, caractérisé en ce que un premier moyen d'allumage débouche dans ladite préchambre.

4. Moteur selon l'une quelconque des revendications précédentes, caractérisé en ce qu'il est installé dans un véhicule et en ce que le demi-cylindre contenant ladite préchambre (8) est orienté vers l'avant du véhicule.

5. Moteur selon l'une quelconque des revendications précédentes, caractérisé en ce qu'il comprend deux moyens d'allumage (7, 11).

6. Moteur selon l'une des revendications 1 à 5, caractérisé en ce qu'au moins un moyen d'allumage (7) est placé à proximité de l'axe longitudinal du cylindre.

7. Moteur selon l'une des revendications 3 à 6, caractérisé en ce que la distance entre le nez du moyen d'injection (9) et l'un des moyens d'allumage (7 ou 11) est comprise entre 15 et 30 mm.

8. Moteur selon l'une quelconque des revendications 3 à 7, caractérisé en ce que le moyen d'injection (9) est disposé de façon diamétralement opposée à la lumière d'échappement (23).

9. Moteur selon l'une quelconque des revendications précédentes, caractérisé en ce que le premier conduit d'admission (32), débouchant dans le même demi-cylindre que le conduit d'échappement (5), peut être mis en liaison avec le conduit d'échappement pour certaines conditions de fonctionnement du moteur.

10. Moteur selon la revendication 9, caractérisé en ce que ledit premier conduit d'admission (32) présente à proximité de la chambre de combustion (3) un axe sensiblement perpendiculaire à l'axe du cylindre afin de créer dans ladite chambre de combustion (3) un mouvement tourbillonnaire autour de l'axe du cylindre.

11. Moteur selon l'une quelconque des revendications 1 à 8, caractérisé en ce que le premier conduit d'admission (32), présente à proximité de la chambre de combustion (3), un axe sensiblement parallèle à l'axe du cylindre, afin de créer dans ladite chambre de combustion (3) un mouvement tourbillonnaire autour d'un axe perpendiculaire à l'axe du cylindre.

## Patentansprüche

1. Viertaktmotor mit innerer Verbrennung und gesteuerter Zündung, eine Brennkammer (3) umfassend, in die über Schlitze (21, 22, 23) eine zweite und eine erste Einlaßleitung (31, 32) und eine Auslaßleitung (5) münden, die durch ein Mittel wie ein Ventil (41, 42, 6) verschließbar ist, wenigstens ein Zündmittel (7; 11), ein Mittel (9) zur direkten Injektion von Kraftstoff in diese Brennkammer (3), wobei diese Einlaßschlitze (21, 22) diametral einander gegenüberliegend angeordnet sind und wobei der Motor im übrigen eine Vorkammer (8) umfaßt, die gegen diese Brennkammer (3) offen ist und in die das Injektionsmittel (9) mündet, wobei diese Vorkammer (8) im Halbzylinder angeordnet ist und den Auslaßschlitz (23) nicht enthält und einen der Einlaßschlitze (21) enthält.

2. Motor nach Anspruch 1, dadurch gekennzeichnet, daß wenigstens eines der Zündmittel (11) eine Achse aufweist, die senkrecht zur Außenfläche des durch das Injektionsmittel (9) erzeugten Kraftstoffstrahles angeordnet ist.

3. Motor nach einem der vorhergehenden Ansprüche, dadurch gekennzeichnet, daß ein erstes Zündmittel in diese Vorkammer mündet.

4. Motor nach einem der vorhergehenden Ansprüche, dadurch gekennzeichnet, daß er in einem Kraftfahrzeug installiert ist, und daß der diese Vorkammer (8) enthaltende Halbzylinder gegen die Vorderseite des Kraftfahrzeuges orientiert ist.

5. Motor nach einem der vorhergehenden Ansprüche, dadurch gekennzeichnet, daß er zwei Zündmittel (7, 11) umfaßt.

6. Motor nach einem der Ansprüche 1 bis 5, dadurch gekennzeichnet, daß wenigstens ein Zündmittel (7) benachbart der Längsachse des Zylinders angeordnet ist.

7. Motor nach einem der Ansprüche 3 bis 6, dadurch gekennzeichnet, daß die Entfernung zwischen der Nase des Injektionsmittels (9) und einem der Zündmittel (7 oder 11) zwischen 15 und 30 mm beträgt.

8. Motor nach einem der Ansprüche 3 bis 7, dadurch gekennzeichnet, daß das Injektionsmittel (9) diametral gegenüberliegend zum Auslaßschlitz (23) angeordnet ist.

9. Motor nach einem der vorhergehenden Ansprüche, dadurch gekennzeichnet, daß die erste Einlaßleitung (32), die in den gleichen Halbzylinder wie die Auslaßleitung (5) mündet, in Verbindung mit der Auslaßleitung für gewisse Arbeitsbedingungen des Motors gesetzt werden kann.

10. Motor nach Anspruch 9, dadurch gekennzeichnet, daß diese erste Einlaßleitung (32) benachbart der Brennkammer (3) eine Achse im wesentlichen senkrecht zur Achse des Zylinders aufweist, um in dieser Brennkammer (3) eine Wirbelbewegung um die Zylinderachse hervorzurufen.

11. Motor nach einem der Ansprüche 1 bis 8, dadurch gekennzeichnet, daß die erste Einlaßleitung (32) benachbart der Brennkammer (3) eine Achse im wesentlichen parallel zur Achse des Zylinders aufweist, um in dieser Brennkammer (3) eine Wirbelbewegung um eine Achse senkrecht zur Achse des Zylinders hervorzurufen.

## Claims

1. Four-stroke internal combustion engine with spark ignition comprising a combustion chamber (3) into which debouch via ports (21, 22, 23) a second and a first inlet pipe (31, 32) and an exhaust pipe (5) each of which can be blocked by a means such as a valve (41, 42, 6), at least one means of ignition (7; 11), a means (9) for direct injection of fuel into said combustion chamber (3), the inlet ports (21, 22) being disposed diametrically opposite, the engine additionally comprising a prechamber (8) opening onto said combustion chamber (3) and into which the means of injection (9) debouches, said prechamber (8) being located in the cylinder half not containing the exhaust port (23) and containing one of the inlet ports (21).

2. Engine according to claim 1, characterised in that at least one of the means of ignition (11) exhibits an axis disposed perpendicularly to the external surface of the jet of fuel produced by the means of injection (9).

3. Engine according to any one of the preceding claims, characterised in that a first means of ignition debouches into said prechamber.

4. Engine according to any one of the preceding claims, characterised in that it is installed in a vehicle and in that the cylinder half containing said prechamber (8) is oriented towards the front of the vehicle.

5. Engine according to any one of the preceding claims, characterised in that it comprises two means of ignition (7, 11).

6. Engine according to one of claims 1 to 5, characterised in that at least of the means of ignition (7) is placed close to the longitudinal axis of the cylinder.

7. Engine according to one of claims 3 to 6, characterised in that the distance between the mouth of the means of injection (9) and one of the means of ignition (7 or 11) lies between 15 and 30 mm.

8. Engine according to any one of claims 3 to 7, characterised in that the means of injection (9) is disposed diametrically opposite the exhaust port (23).

9. Engine according to any one of the preceding claims, characterised in that the first inlet pipe (32), debouching into the same cylinder half as the exhaust pipe (5), can be connected to the exhaust pipe in certain engine operating conditions.

10. Engine according to claim 9, characterised in that close to the combustion chamber (3) said first inlet pipe (32) exhibits an axis substantially perpendicular to the axis of the cylinder in order to create a swirling movement about the axis of the cylinder in said combustion chamber (3).

11. Engine according to any of claims 1 to 8, characterised in that close to the combustion chamber (3) the first inlet pipe (32) exhibits an axis substantially parallel to the axis of the cylinder in order to create a swirling movement about an axis perpendicular to the axis of the cylinder in said combustion chamber (3).
